# EUROPEAN PATENT SPECIFICATION

(11) **EP 4 590 968 B1**
(45) Date of publication and mention of the grant of the patent: **10.06.2026**
(21) Application number: 23765569.1
(22) Date of filing: 31.08.2023
(51) Int. Cl.: F04B 39/02, F04B 39/06, F04C 29/00, F04C 29/04, F04B 39/12

(54) **COOLING DEVICE FOR COOLING OIL, OIL-INJECTED COMPRESSOR DEVICE PROVIDED WITH SUCH A COOLING DEVICE, AND METHOD FOR CONTROLLING SUCH A COOLING DEVICE**
KÜHLVORRICHTUNG ZUR KÜHLUNG VON ÖL, ÖLEINGESPRITZTE KOMPRESSORVORRICHTUNG MIT SOLCH EINER KÜHLVORRICHTUNG UND VERFAHREN ZUR STEUERUNG SOLCH EINER KÜHLVORRICHTUNG
DISPOSITIF DE REFROIDISSEMENT POUR HUILE DE REFROIDISSEMENT, DISPOSITIF DE COMPRESSEUR À INJECTION D'HUILE ÉQUIPÉ D'UN TEL DISPOSITIF DE REFROIDISSEMENT, ET PROCÉDÉ DE COMMANDE D'UN TEL DISPOSITIF DE REFROIDISSEMENT

(30) Priority: 22.09.2022 BE 202205756
(43) Date of publication of application: 30.07.2025
(73) Proprietor: ATLAS COPCO AIRPOWER, naamloze vennootschap, 2610 Wilrijk (BE)
(72) Inventor: STALJANSSENS, Daniel, 2610 Wilrijk (BE)
(74) Representative: Atlas Copco Airpower IP department
(86) International application number: PCT/IB2023/058609
(87) International publication number: WO 2024/062309

(56) References cited:
- EP-A1- 2 610 495
- EP-B1- 3 256 762
- BE-A1- 1 024 497
- BE-B1- 1 024 497
- CN-A- 104 653 465
- US-A1- 2012 090 340
- US-A1- 2020 102 950

## Description

The present invention relates to a cooling device for cooling oil.

More specifically, the invention is suitable for cooling the oil of an oil-injected compressor device, wherein the oil, after being injected into and flowing through a compressor element of the compressor device, is cooled by means of the cooling device according to the invention and subsequently injected back into the compressor element.

A "compressor device" herein refers to a device for compressing a gas, and therefore also, for example, a vacuum pump device.

Analogously, a "compressor element" refers to an element for compressing a gas, and therefore also, for example, a vacuum pump element.

Of course, this is not the only application for the cooling device according to the invention, and such a cooling device for cooling oil can also be used in other oil-injected machines.

The oil is injected into the compressor element in order to cool said compressor element to avoid overheating, to optimize and improve the performance of the compressor device, and to prolong the service life of the oil and the compressor device.

In addition to cooling purposes, this oil can also be used for lubrication and sealing of components in the compressor element.

In this respect, it is typically ensured that a temperature at an outlet of the compressor element for the compressed gas does not fall below a condensation temperature of the compressed gas in order to prevent condensate from forming in the compressed gas, which is of course highly undesirable.

Already known are cooling devices for cooling oil, which comprise an oil reservoir having an oil line which is fluidly connected thereto, and which leads to an energy recovery system.

Via a three-way valve switched by a first mechanical thermostat, this energy recovery system can be bypassed along a bypass channel.

The energy recovery system allows heat from the oil to be recovered and used for another application, for example, to heat water for sanitary purposes. The energy recovery system may consist of allowing the oil and sanitary water to flow through a heat exchanger.

Via the first mechanical thermostat, a difference between a first switching temperature and a temperature of the oil is used to control whether and how much oil passes through the energy recovery system.

The more oil passes through the energy recovery system, the more substantially the oil will cool.

After the energy recovery system and the bypass channel, the oil line leads to a second mechanical thermostat.

Based on a difference between a second switching temperature of this second mechanical thermostat and the temperature of the oil, the oil will be routed to an oil cooler and then to an oil injection line or directly to said oil injection line without allowing the oil to pass through the oil cooler.

If the energy recovery system cannot sufficiently cool the oil or if the energy recovery system is not in operation, the oil will be able to be further cooled by the oil cooler. This oil cooler can be, for example, a cooling air-oil cooler provided with a fan.

From the oil injection line, the now cooled oil can be reinjected, for example, into a compressor device.

Such a cooling device has the disadvantage that the second switching temperature of the second mechanical thermostat must be higher than the first switching temperature of the first mechanical thermostat of the three-way valve.

As a result, the oil can never be cooled to the lowest possible temperature, which is not only bad for the performance of the compressor element into which the oil is subsequently injected, but also detrimental to the service life of the oil.

Furthermore, during compressor startup, when little or no cooling of the compressor device is still required, oil will in any case have to flow via the bypass channel both through the three-way valve and then through the second mechanical thermostat, which results in a pressure drop.

Since the thermostats have a fixed switching temperature, a worst-case scenario for the appearance of condensate in the compressor device will always be assumed when setting the exact switching temperature, such that the temperature of the oil is also controlled according to the worst-case scenario to ensure that condensate can never appear.

This means that in all other scenarios or cases, the oil will not be cooled to the lowest possible temperature.

Also, such temperature control of the oil will depend heavily on the energy recovery system. If this energy recovery system removes a lot of heat from the oil, there is a chance that the oil may cool down too much, which means that after injection of the too-cold oil, the temperature of the compressed gas in the compressor device at the outlet becomes lower than the condensation temperature.

This invention aims at solving at least one of the aforementioned and other disadvantages.

The document EP 3 256 762 discloses an oil circuit for a compressor system comprising a heat recovery.

The document EP 2 610 495 discloses a compressor system with a cooling circuit for the oil comprising a heat regulating valve through which it decided once to re-guide the oil back to the compressor or to a heat recovery system and then to an oil cooler.

The present invention relates to a cooling device for cooling oil, and is characterized in that the cooling device comprises an oil reservoir having an oil line fluidly connected thereto, wherein the following are included successively in the oil line:
- a first electronic thermostat having a first switching temperature;
- an energy recovery system;
- an oil cooler;

wherein the oil line runs from the oil cooler back to the first electronic thermostat and then to an oil injection line,
wherein the first electronic thermostat is configured to send by switching, based on a difference between the first switching temperature and a temperature of the oil, the oil from the oil reservoir either into the energy recovery system and into the oil cooler or directly into the oil injection line.

In this context, "sending the oil directly into the oil injection line" means sending the oil into the oil injection line without letting it pass through the energy recovery system and/or the oil cooler.

An advantage is that the first switching temperature of the first electronic thermostat is not fixed but is variably adjustable.

In this way, the first switching temperature can be selected based on one or more of the following parameters:
- an operating parameter of the cooling device, such as a cooling capacity of the oil cooler;
- ambient parameters of an environment in which the cooling device is located, such as an ambient temperature in this environment;
- an amount or flow rate of cooling fluid flowing through the energy recovery system; and/or
- an operating condition of a compressor device or the like in which the cooling device is used, such as, for example, an operating pressure at an outlet of the compressor element.

In particular, in the case where the cooling device is used for cooling oil which, after cooling, is then injected into a compressor device for compressing a gas, the first switching temperature can be selected based on a condensation temperature of the compressed gas in the compressor device, wherein this condensation temperature is calculated based on one or more of the aforementioned parameters. The first switching temperature in this case ensures that a temperature of the injected oil is such that a temperature of the compressed gas at an outlet of the compressor element is as low as possible without becoming lower than the condensation temperature of the compressed gas.

Furthermore, this means that the first switching temperature is no longer based on a worst-case scenario, but on an actual operating condition of the compressor device.

Consequently, the oil will be cooled to the lowest possible temperature at all times, without any risk of condensate formation in the compressor device.

As a result, the energy recovery system will also have little or no influence anymore on a final temperature of the cooled oil, since control of the first switching temperature is performed considering a heat reduction by the energy recovery system.

Moreover, the oil will always, i.e., even during startup of the compressor device or the like, have to flow through only one thermostat.

Preferably, the oil cooler is a cooling air-oil cooler.

Preferably, the oil cooler is provided with a controllable fan for generating a cooling air flow for cooling the oil cooler.

The controllable fan allows cooling of the oil by the oil cooler to be controlled.

If the energy recovery system is not in operation, or a cooling capacity thereof changes, this can be responded to by appropriately controlling the controllable fan.

In a practical embodiment, the first electronic thermostat is provided with one or more oil filters for filtering the oil.

Since the oil always passes through this first electronic thermostat regardless of whether the oil is to be cooled or not, the oil will always be filtered, meaning that purified oil always goes to the injection line.

In this case, "provided with one or more oil filters" also means that the housing of the first electronic thermostat is provided with oil filters through which oil can flow.

According to a preferred feature of the invention, downstream of the energy recovery system and upstream of the oil cooler, a second thermostat having a second switching temperature is included in the oil line, wherein the oil line flows from the oil cooler back into the second thermostat, then into the first electronic thermostat and finally leads into the oil injection line, wherein the second thermostat is configured, by switching based on a difference between the second switching temperature and the temperature of the oil, to send the oil from the energy recovery system either into the oil cooler or directly back into the first electronic thermostat.

In this respect, "sending the oil directly back into the first electronic thermostat" means sending the oil back into the first electronic thermostat without letting it pass through the oil cooler and/or the energy recovery system.

In the event that the energy recovery system is not in operation, or its cooling capacity changes, causing the oil not to be sufficiently cooled, the second thermostat will ensure that the oil is still sent to the oil cooler for further cooling.

Also, in this case during startup of a compressor device or the like provided with the cooling device according to the invention, when little or no cooling of this compressor device or the like is still required, the oil will only have to flow through the first thermostat before being sent to the oil injection line. Only if cooling is required by the oil cooler, the oil will also flow through the second thermostat.

The second switching temperature can be a standard selected temperature setting, which does not necessarily need to be higher than the first switching temperature, thus eliminating the need to assume a worst-case scenario.

The invention also relates to an oil-injected compressor device for compressing a gas, characterized in that it is provided with a cooling device for cooling oil according to the invention, wherein the compressor device is provided with an oil-injected compressor element having an oil separator for separating injected oil, wherein the oil separator is fluidly connected to the oil reservoir in order to discharge the separated oil to the oil reservoir, and wherein the oil injection line leads back to the compressor element in order to inject oil into the compressor element.

The advantages of such compressor device are similar to the aforementioned advantages of a cooling device for cooling oil according to the invention.

Finally, the invention relates to a method for controlling a cooling device according to any one of the embodiments described above, characterized in that:
- when the aforementioned temperature of the oil is higher than the first switching temperature, the first electronic thermostat sends the oil from the oil reservoir into the energy recovery system; and
- when the aforementioned temperature of the oil is lower than or equal to the first switching temperature, the first electronic thermostat sends the oil from the oil reservoir directly to the oil injection line.

As a result, the oil only passes through the energy recovery system and, consequently, the oil is cooled by the energy recovery system only when the temperature of the oil is too high, that is, when the temperature of the oil is higher than the first switching temperature.

According to a preferred feature of the method according to the invention, the second thermostat sends the oil from the energy recovery system
- to the oil cooler when the temperature of the oil is higher than the second switching temperature; and
- directly back to the first electronic thermostat when the temperature of the oil is lower than the second switching temperature.

As a result, the oil only passes through the oil cooler and, consequently, the oil is cooled by the oil cooler only when the temperature of the oil is too high, that is, when the temperature of the oil is higher than the second switching temperature.

According to a next preferred feature of the method according to the invention, the cooling device is provided with an oil-injected compressor device according to the invention, wherein the first switching temperature is selected so as to be higher than a value for the temperature of the oil at which the compressed gas at an outlet of the oil-injected compressor element is at its condensation temperature.

In this way, the oil is normally never cooled so much by the cooling device that condensate would be formed at the outlet of the compressor element.

To further reduce the risk of this condensate forming, the first switching temperature is preferably selected so as to be equal to the aforementioned value plus an initial adjustable positive safety margin.

With the intention of better demonstrating the features of the invention, some preferred embodiments of a cooling device for cooling oil and an oil-injected compressor device provided with such a cooling device according to the invention and a method of controlling such a cooling device according to the invention have been described below, by way of example without any limiting effect, with reference to the accompanying drawing, in which:

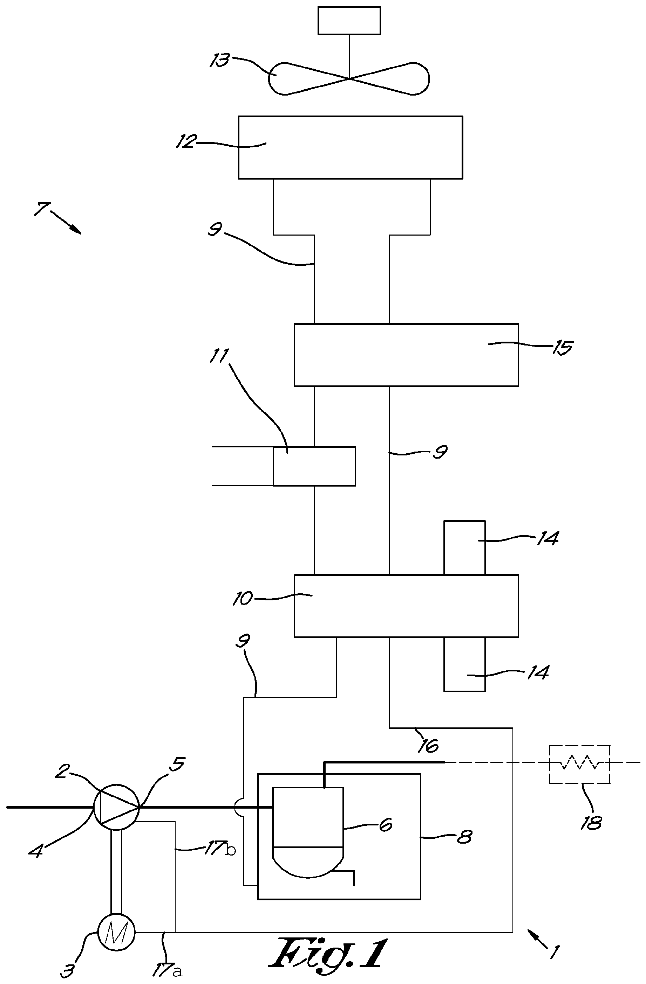

Figure 1 schematically illustrates an oil-injected compressor device provided with a cooling device according to the invention.

The oil-injected compressor device 1 illustrated schematically in the figure comprises an oil-injected compressor element 2 driven by a drive 3, in this case in the form of a motor.

The compressor element 2 has an inlet 4 for gas to be compressed and an outlet 5 for compressed gas, which outlet 5 is fluidly connected to an oil separator 6 for separating injected oil.

The compressor device 1 is further provided with a cooling device 7 for cooling oil, which primarily comprises an oil reservoir 8 having an oil line 9 fluidly connected thereto.

The oil separator 6 is fluidly connected to the oil reservoir 8 in order to discharge the separated oil to the oil reservoir 8. The oil reservoir 8 collects the oil separated by the oil separator 6.

It is not precluded within the scope of the invention that the oil separator 6 and the oil reservoir 8 are provided in the same oil separation vessel. In this respect, the gas compressed by the compressor element 2 together with the injected oil, for example, is forced to make a vortex movement in an uppermost part of the oil separation vessel, as a result of which the injected oil is propelled against an internal wall of the uppermost part of the oil separation vessel by means of a centrifugal force caused by the vortex and is thus separated from the compressed gas. Consequently, the uppermost part of the oil separation vessel serves as an oil separator 6. The separated oil then flows by gravity along the internal wall into the oil reservoir 8, which is located in a lowermost part of the oil separation vessel.

A number of components are included in the oil line 9; according to the invention these are at least:
- a first electronic thermostat 10 having a first switching temperature;
- an energy recovery system 11; and
- an oil cooler 12.

In the example shown, the energy recovery system 11 is a system for extracting heat from the oil using a cooling fluid flowing through the energy recovery system 11.

The oil cooler 12 in this case is a cooling air-oil cooler and is provided with a fan 13. However, this could also be a cooling water-oil cooler.

The fan 13 in this case is a fan with a controllable speed. However, it is not precluded within the scope of the invention that the fan 13 is a fan with a fixed rotational speed or fixed speed.

The first electronic thermostat 10 is provided in this case with two oil filters 14. The number of oil filters 14 is not limiting, that is, there may also be no oil filters 14, only one oil filter 14 or more than two oil filters 14. For example, the oil filters 14 may also be provided elsewhere in the cooling device 7 or in the compressor assembly 1.

In the example illustrated, an additional, but not essential, second thermostat 15 is added between the energy recovery system 11 and the oil cooler 12.

This second thermostat 15 is in this case a mechanical thermostat, but this could also be an electric thermostat.

In this case, the following are therefore included successively in the oil line (9):
- the first electronic thermostat 10 having the first switching temperature;
- the energy recovery system 11;
- the second thermostat 15 having the second switching temperature;
- the oil cooler 12.

The oil line 9 passes from the oil cooler 12 back into the second thermostat 15, then into the first electronic thermostat 10 and finally leads into an oil injection line 16.

This oil injection line 16 leads back into the compressor element 2, wherein in this case the oil injection line 16 splits into two sub-lines 17a, 17b: a first sub-line 17a for injection of oil into the motor 3 and a second sub-line 17b for injection of oil into a compression chamber of the compressor element 2 in which the gas drawn in by the compressor element 2 is compressed.

In other words, oil will be able to be injected in at least two different places in the compressor device 1.

The first electronic thermostat 10 will, by switching based on a difference between the first switching temperature and a temperature of the oil, send the oil from the oil reservoir 8 either into the energy recovery system 11 or directly into the oil injection line 16.

The temperature of the oil may, for example, be measured in the oil separator 6 or determined based on a temperature of the compressed gas measured at the outlet 5 of the compressor element 2 or in the oil separator 6. In the latter case, it may be assumed, for example, that the temperature of the oil is equal to the measured temperature of the compressed gas.

The temperature of the oil may also be measured, for example, in the oil reservoir 8.

Furthermore, the temperature of the oil may optionally also be measured in the oil injection line 16 or determined based on a temperature of the oil measured in the oil injection line 16. In the latter case, for example, the temperature of the oil in the oil separator 6 or the oil reservoir 8 is determined in a known manner from the measured temperature of the injected oil in the oil injection line 16, and the first switching temperature is taken at a desired value for the temperature in the oil separator 6 or the oil reservoir 8.

This first switching temperature is not a fixed temperature, but a variably adjustable value. How this first switching temperature is determined will be explained in detail below.

The second thermostat 15 will, by switching based on a difference between the second switching temperature and the temperature of the oil, send the oil from the energy recovery system 11 either into the oil cooler 12 or directly back into the first electronic thermostat 10.

In this case, this second thermostat 15 is a mechanical thermostat, wherein the second switching temperature is a fixed value. This second switching temperature may be equal to or lower than the first switching temperature. Since the oil first passes through the first electronic thermostat 10, it is no longer necessary to select this second switching temperature so as to be higher than the first switching temperature.

How this second switching temperature is determined will be explained in detail below.

The operation of the compressor device 1 and cooling device 7 for cooling oil is very easy to understand and as follows.

During a startup phase of the compressor device 1, the temperature of the compressed gas at the outlet 5 will be lower than the condensation temperature of this compressed gas.

The condensation temperature is determined based on an ambient temperature, an outlet pressure of the compressor element 2, and a relative humidity of the gas, among other factors.

The relative humidity of the gas is either an assumed worst-case relative humidity value for the compressed gas of 100% or a measured value for a relative humidity of the gas. In the latter case, the relative humidity of the gas can be measured at the inlet 4 or at the outlet 5 of the compressor element 2.

The compressor element 2 will cause a pressure build-up of the gas drawn in and in the oil reservoir 8, which causes oil to be circulated in the system.

During startup of the compressor device 1, this oil is still cold or cool.

Since the temperature of the compressed gas at the outlet 5 during the startup phase is lower than the condensation temperature, this temperature should be raised as soon as possible.

The oil will reach the first electronic thermostat 10, which will immediately send the oil directly into the oil injection line 16, that is, without directing the oil through the energy recovery system 11, since the temperature of the oil will be lower than the first switching temperature.

This first switching temperature is determined based on the aforementioned condensation temperature. When the condensation temperature changes, this first switching temperature will also change.

Preferably, the first switching temperature is selected so as to be just above the condensation temperature, such that the temperature at the outlet 5 is controlled so that it is higher than the condensation temperature. For example, the first switching temperature is selected so as to be 1°C, 2°C or 3°C higher than the condensation temperature.

An adjustable offset or margin is thus used, wherein a certain safety offset or margin can be added to the condensation temperature. This allows variation in the cooling and/or efficiency of the compressor element 2 to be taken into account. It should be noted, however, that the higher the safety offset or margin selected, the lower an efficiency of the compressor device 1 will be.

When passing through the first electronic thermostat 10, the oil will flow through the oil filters 14, thereby removing all dirt and other contaminating particles from the oil.

Until such time as the temperature at the outlet 5 is lower than the condensation temperature, the first electronic thermostat 10 will remain closed, that is, will not send the oil to the energy recovery system 11.

The oil will then be injected via the oil injection line 16 into the compressor element 2 and/or the motor 3, and together with the compressed gas will subsequently enter the oil separator 6. The separated oil will be sent from there to the oil reservoir 8.

The compressor unit 1 will generate heat during operation, causing the temperature at the outlet 5 to rise.

At a certain point in time, it will become higher than the condensation temperature.

At this time, the temperature of the oil will be higher than the first switching temperature, which will cause the first electronic thermostat 10 to open and send the oil into the energy recovery system 11.

The oil will be cooled by the energy recovery system 11, wherein the extracted heat is further utilized expediently, for example, for heating domestic water or heating applications.

The oil then reaches the second thermostat 15. The second switching temperature of this second thermostat 15 is determined, for example, based on a worst-case condition where condensation may occur, wherein an assumed worst-case condensation temperature is the second switching temperature.

This worst-case condensation temperature is determined relative to an operating pressure of the compressor device 1 and an ambient temperature.

If the oil has cooled sufficiently, the oil temperature will be lower than the second switching temperature.

The oil will then be sent by the second thermostat 15 directly back into the first electronic thermostat 10, where the oil will flow through the oil filters 14 before entering the oil injection line 16.

Thus, the oil will not pass via the oil cooler 12.

If it should occur that the temperature of the oil has not dropped sufficiently, because the energy recovery system 11 cannot cool sufficiently or is not operating at all, the second thermostat 15 will open.

The oil is now sent via the oil cooler 12 and will be further cooled and then sent back into the second thermostat 15 and the first electronic thermostat 10.

A cooling capacity of the oil cooler 12 can be controlled based on a desired value for the temperature of the oil.

In this case, the oil cooler 12 is a cooling air-oil cooler, wherein a cooling air flow is generated for cooling the oil cooler 12 and wherein the cooling capacity is controlled by adjusting a speed of the adjustable fan 13 with which the oil cooler 12 is provided.

After passing through the oil filters 14 of the first electronic thermostat 10, the cooled oil is sent into the oil injection line 16 as before.

From there, the oil is sent to the compressor element 2 to be injected.

The injected oil, after passing through the compressor element 2 and/or the motor 3, will, together with the compressed gas, reach the oil separator 6, and from there be sent to the oil reservoir 8.

Although, in the example described above, the second thermostat 15 is a mechanical thermostat, the second thermostat 15 is not precluded from being an electronic thermostat.

The second switching temperature can in this case be controlled based on the first switching temperature, the condensation temperature of the compressed gas or a combination of two or more of the aforementioned and/or other parameters based on which the first switching temperature can be selected.

In the example illustrated in figure 1, two thermostats 10, 15 are illustrated. According to the invention, it is possible that only the first electronic thermostat 10 is present and that there is no second thermostat 15.

In this case, the energy recovery system 11 and the oil cooler 12 will be arranged in series in the oil line 9, and the oil line 9 will extend from the oil cooler 12 to the first electronic thermostat 10.

In such a case, preferably the fan 13 of the oil cooler 12 is controllable, i.e., the speed or rotational speed can be controlled.

If the oil cooler 12 is a cooling water-oil cooler, preferably the flow rate and/or temperature of the cooling water may be controlled.

Control of the fan 13 may be based on the temperature of the oil, the cooling capacity of the energy recovery system 11, the first switching temperature and/or the condensation temperature of the compressed gas. This control essentially corresponds to a control similar to that of the second thermostat 15 based on the aforementioned second switching temperature.

When a fan 13 with a controllable speed is used, it may also cool an aftercooler 18 of the oil-injected compressor device 1 for the compressed gas.

Such an aftercooler 18 is arranged downstream of the oil separator 6 and is illustrated by dotted lines in figure 1.

The fan 13 must then cool this aftercooler 18 and will thus be controlled in this case to provide sufficient aftercooling of the compressed gas, but by using the cooling device 7 it will be possible to still control the oil temperature as well.

The present invention is by no means limited to the embodiments described as examples and illustrated in the figures, but a cooling device for cooling oil and an oil-injected compressor device provided with such a cooling device according to the invention can be implemented in a variety of shapes and sizes without going beyond the scope of the invention as defined by the appended claims.

## Claims

1. A cooling device for cooling oil, **characterized in that** the cooling device (7) comprises an oil reservoir (8) having an oil line (9) fluidly connected thereto, wherein the following are included successively in the oil line (9):
- a first electronic thermostat (10) having a first switching temperature;
- an energy recovery system (11);
- an oil cooler (12);
wherein the oil line (9) runs from the oil cooler (12) back to the first electronic thermostat (10) and then to an oil injection line (16),
wherein the first electronic thermostat (10) is configured to send by switching, based on a difference between the first switching temperature and a temperature of the oil, the oil from the oil reservoir (8) either into the energy recovery system (11) and into the oil cooler (12) or directly into the oil injection line (16).

2. The cooling device according to claim 1, **characterized in that** the oil cooler (12) is a cooling air-oil cooler, whereby preferably the oil cooler (12) is provided with a controllable fan (13) for generating a cooling airflow for cooling the oil cooler (12).

3. The cooling device according to any one of the preceding claims, **characterized in that** the first electronic thermostat (10) is provided with one or more oil filters (14) for filtering the oil.

4. The cooling device according to any one of the preceding claims, **characterized in that** downstream of the energy recovery system (11) and upstream of the oil cooler (12), a second thermostat (15) having a second switching temperature is included in the oil line (9), wherein the oil line (9) flows from the oil cooler (12) back into the second thermostat (15), then into the first electronic thermostat (10) and finally leads into the oil injection line (16), wherein the second thermostat (15) is configured, by switching based on a difference between the second switching temperature and the temperature of the oil, to send the oil from the energy recovery system (11) either into the oil cooler (12) or directly back into the first electronic thermostat (10), whereby preferably the second thermostat (15) is an electronic thermostat.

5. The cooling device according to claim 4, **characterized in that** the first switching temperature is equal to or higher than the second switching temperature.

6. An oil-injected compressor device for compressing a gas, **characterized in that** it is provided with a cooling device (7) for cooling oil according to any one of the preceding claims, wherein the compressor device (1) is provided with an oil-injected compressor element (2) having an oil separator (6) for separating injected oil, wherein the oil separator (6) is fluidly connected to the oil reservoir (8) in order to discharge the separated oil to the oil reservoir (8), and wherein the oil injection line (16) leads back to the compressor element (2) in order to inject oil into the compressor element (2).

7. The oil-injected compressor device according to claim 6, **characterized in that** the first switching temperature is higher than a value for the aforementioned temperature of the oil, wherein the compressed gas at an outlet (5) of the oil-injected compressor element (2) is at its condensation temperature, whereby preferably the first switching temperature is equal to the aforementioned value plus an adjustable positive safety margin.

8. A method for controlling a cooling device according to any one of the preceding claims 1 to 5, **characterized in that**:
- when the aforementioned temperature of the oil is higher than the first switching temperature, the first electronic thermostat (10) sends the oil from the oil reservoir (8) into the energy recovery system (11); and
- when the aforementioned temperature of the oil is lower than or equal to the first switching temperature, the first electronic thermostat (10) sends the oil from the oil reservoir (8) directly to the oil injection line (16).

9. The method according to claim 8 for controlling a cooling device according to any one of the preceding claims 5 to 7, **characterized in that**:
- when the aforementioned temperature of the oil is higher than the second switching temperature, the second thermostat (15) sends the oil from the energy recovery system (11) to the oil cooler (12); and
- when the aforementioned temperature of the oil is lower than or equal to the second switching temperature, the second thermostat (15) sends the oil from the energy recovery system (11) directly back to the first electronic thermostat (10),
whereby preferably the first switching temperature is selected so as to be equal to or higher than the second switching temperature.

10. The method according to claim 8 or 9, **characterized in that** the cooling device (7) is provided with an oil-injected compressor device (1) according to claim 6 or 7, wherein the first switching temperature is selected so as to be higher than a value for the aforementioned temperature of the oil, wherein the compressed gas at an outlet (5) of the oil-injected compressor element (2) is at its condensation temperature, whereby preferably the first switching temperature is selected so as to be equal to the aforementioned value plus an initial adjustable positive safety margin.

11. The method according to claim 10, **characterized in that** the aforementioned condensation temperature is determined based on
- an operating pressure of the compressed gas at the outlet (5) of the oil-injected compressor element (2);
- an ambient temperature in an environment of the compressor device (1); and
- an assumed worst-case relative humidity value for the compressed gas of 100% or a measured value for a relative humidity of the gas.

12. The method according to claim 10 or 11, **characterized in that** the aforementioned temperature of the oil is measured in the oil separator (6) or the aforementioned temperature of the oil is determined based on a temperature of the compressed gas measured at the outlet (5) of the compressor element (2) or in the oil separator (6).

13. The method according to any one of the preceding claims 8 to 11, **characterized in that** the aforementioned temperature of the oil is measured in the oil reservoir (8).

14. The method according to any one of the preceding claims 8 to 11, **characterized in that** the aforementioned temperature of the oil is measured in the oil injection line (16) or determined based on a temperature of the oil measured in the oil injection line (16).

15. The method according to any one of the preceding claims 8 to 14, **characterized in that** a cooling capacity of the oil cooler (12) is controlled based on a desired value for the aforementioned temperature of the oil, whereby preferably the oil cooler (12) is a cooling air-oil cooler, wherein a cooling air flow is generated in order to cool the oil cooler (12) and the cooling capacity is controlled by adjusting a rotational speed of a controllable fan (13) with which the oil cooler (12) is provided.

## Patentansprüche

1. Kühlvorrichtung zum Kühlen von Öl, **dadurch gekennzeichnet, dass** die Kühlvorrichtung (7) einen Ölvorratsbehälter (8) mit einer Ölleitung (9) in Fluidverbindung damit umfasst, wobei Folgendes hintereinander in der Ölleitung (9) enthalten ist:
- ein erster elektronischer Thermostat (10) mit einer ersten Schalttemperatur;
- ein Energierückgewinnungssystem (11);
- ein Ölkühler (12);
wobei die Ölleitung (9) von dem Ölkühler (12) zurück zu dem ersten elektronischen Thermostat (10) und dann zu einer Öleinspritzleitung (16) verläuft,
wobei der erste elektronische Thermostat (10) dazu konfiguriert ist, durch Schalten, auf der Grundlage einer Differenz zwischen der ersten Schalttemperatur und einer Temperatur des Öls, das Öl aus dem Ölvorratsbehälter (8) entweder in das Energierückgewinnungssystem (11) und in den Ölkühler (12) oder direkt in die Öleinspritzleitung (16) zu befördern.

2. Kühlvorrichtung nach Anspruch 1, **dadurch gekennzeichnet, dass** der Ölkühler (12) ein Kühlluft-Ölkühler ist, wodurch der Ölkühler (12) bevorzugt mit einem steuerbaren Ventilator (13) zum Erzeugen eines Kühlluftstroms zum Kühlen des Ölkühlers (12) versehen ist.

3. Kühlvorrichtung nach einem der vorstehenden Ansprüche, **dadurch gekennzeichnet, dass** der erste elektronische Thermostat (10) mit einem oder mehreren Ölfiltern (14) zum Filtern des Öls versehen ist.

4. Kühlvorrichtung nach einem der vorstehenden Ansprüche, **dadurch gekennzeichnet, dass** stromabwärts des Energierückgewinnungssystems (11) und stromaufwärts des Ölkühlers (12) ein zweiter Thermostat (15) mit einer zweiten Schalttemperatur in der Ölleitung (9) enthalten ist, wobei die Ölleitung (9) von dem Ölkühler (12) zurück in den zweiten Thermostat (15), dann in den ersten elektronischen Thermostat (10) fließt und schließlich in die Öleinspritzleitung (16) führt, wobei der zweite Thermostat (15) dazu konfiguriert ist, durch Schalten, auf der Grundlage einer Differenz zwischen der zweiten Schalttemperatur und der Temperatur des Öls, das Öl aus dem Energierückgewinnungssystem (11) entweder in den Ölkühler (12) oder direkt zurück in den ersten elektronischen Thermostat (10) zu befördern, wodurch bevorzugt der zweite Thermostat (15) ein elektronischer Thermostat ist.

5. Kühlvorrichtung nach Anspruch 4, **dadurch gekennzeichnet, dass** die erste Schalttemperatur gleich der oder höher als die zweite Schalttemperatur ist.

6. Öleingespritzte Kompressorvorrichtung zum Verdichten eines Gases, **dadurch gekennzeichnet, dass** sie mit einer Kühlvorrichtung (7) zum Kühen von Öl nach einem der vorstehenden Ansprüche versehen ist, wobei die Kompressorvorrichtung (1) mit einem öleingespritzten Kompressorelement (2) versehen ist, das einen Ölabscheider (6) zum Abscheiden von eingespritztem Öl aufweist, wobei der Ölabscheider (6) in Fluidverbindung mit dem Ölvorratsbehälter (8) steht, um das abgeschiedene Öl in den Ölvorratsbehälter (8) abzulassen, und wobei die Öleinspritzleitung (16) zurück zu dem Kompressorelement (2) führt, um Öl in das Kompressorelement (2) einzuspritzen.

7. Öleingespritzte Kompressorvorrichtung nach Anspruch 6, **dadurch gekennzeichnet, dass** die erste Schalttemperatur höher als ein Wert für die vorstehend erwähnte Temperatur des Öls ist, wobei das verdichtete Gas an einem Auslass (5) des öleingespritzten Kompressorelements (2) an seiner Kondensationstemperatur ist, wodurch bevorzugt die erste Schalttemperatur gleich dem vorstehend erwähnten Wert zuzüglich eines einstellbaren positiven Sicherheitsbereichs ist.

8. Verfahren zum Steuern einer Kühlvorrichtung nach einem der vorstehenden Ansprüche 1 bis 5, **dadurch gekennzeichnet, dass**:
- wenn die vorstehend erwähnte Temperatur des Öls höher als die erste Schalttemperatur ist, der erste elektronische Thermostat (10) das Öl aus dem Ölvorratsbehälter (8) in das Energierückgewinnungssystem (11) befördert; und
- wenn die vorstehend erwähnte Temperatur des Öls niedriger als die oder gleich der ersten Schalttemperatur ist, der erste elektronische Thermostat (10) das Öl aus dem Ölvorratsbehälter (8) direkt in die Öleinspritzleitung (16) befördert.

9. Verfahren nach Anspruch 8 zum Steuern einer Kühlvorrichtung nach einem der vorstehenden Ansprüche 5 bis 7, **dadurch gekennzeichnet, dass**:
- wenn die vorstehend erwähnte Temperatur des Öls höher als die zweite Schalttemperatur ist, der zweite Thermostat (15) das Öl aus dem Energierückgewinnungssystem (11) zu dem Ölkühler (12) befördert; und
- wenn die vorstehend erwähnte Temperatur des Öls niedriger als die oder gleich der zweiten Schalttemperatur ist, der zweite Thermostat (15) das Öl aus dem Energierückgewinnungssystem (11) direkt zurück zu dem ersten elektronischen Thermostat (10) befördert,
wodurch bevorzugt die erste Schalttemperatur so ausgewählt ist, dass sie gleich der oder höher als die zweite Schalttemperatur ist.

10. Verfahren nach Anspruch 8 oder 9, **dadurch gekennzeichnet, dass** die Kühlvorrichtung (7) mit einer öleingespritzten Kompressorvorrichtung (1) nach Anspruch 6 oder 7 versehen ist, wobei die erste Schalttemperatur so ausgewählt ist, dass sie höher als ein Wert für die vorstehend erwähnte Temperatur des Öls ist, wobei das verdichtete Gas an einem Auslass (5) des öleingespritzten Kompressorelements (2) an seiner Kondensationstemperatur ist, wodurch bevorzugt die erste Schalttemperatur so ausgewählt ist, dass sie gleich dem vorstehend erwähnten Wert zuzüglich eines anfänglichen einstellbaren positiven Sicherheitsbereichs ist.

11. Verfahren nach Anspruch 10, **dadurch gekennzeichnet, dass** die vorstehend erwähnte Kondensationstemperatur bestimmt wird auf der Grundlage von
- einem Betriebsdruck des verdichteten Gases an dem Auslass (5) des öleingespritzten Kompressorelements (2);
- einer Umgebungstemperatur in einer Umgebung der Kompressorvorrichtung (1); und
- einem angenommenen schlechtesten Fall eines relativen Feuchtigkeitswerts für das verdichtete Gas von 100 % oder einem gemessenen Wert für eine relative Feuchtigkeit des Gases.

12. Verfahren nach Anspruch 10 oder 11, **dadurch gekennzeichnet, dass** die vorstehend erwähnte Temperatur des Öls in dem Ölabscheider (6) gemessen wird oder die vorstehend erwähnte Temperatur des Öls auf der Grundlage einer Temperatur des verdichteten Gases bestimmt wird, die an dem Auslass (5) des Kompressorelements (2) oder in dem Ölabscheider (6) gemessen wird.

13. Verfahren nach einem der vorstehenden Ansprüche 8 bis 11, **dadurch gekennzeichnet, dass** die vorstehend erwähnte Temperatur des Öls in dem Ölvorratsbehälter (8) gemessen wird.

14. Verfahren nach einem der vorstehenden Ansprüche 8 bis 11, **dadurch gekennzeichnet, dass** die vorstehend erwähnte Temperatur des Öls in der Öleinspritzleitung (16) gemessen wird oder auf der Grundlage einer Temperatur des Öls bestimmt wird, die in der Öleinspritzleitung (16) gemessen wird.

15. Verfahren nach einem der vorstehenden Ansprüche 8 bis 14, **dadurch gekennzeichnet, dass** eine Kühlkapazität des Ölkühlers (12) auf der Grundlage eines gewünschten Werts für die vorstehend erwähnte Temperatur des Öls gesteuert wird, wodurch bevorzugt der Ölkühler (12) ein Kühlluft-Ölkühler ist, wobei ein Kühlluftstrom erzeugt wird, um den Ölkühler (12) zu kühlen, und die Kühlkapazität durch Einstellen einer Drehzahl eines steuerbaren Ventilators (13) gesteuert wird, mit dem der Ölkühler (12) versehen ist.

## Revendications

1. Dispositif de refroidissement destiné au refroidissement d'huile, **caractérisé en ce que** le dispositif de refroidissement (7) comprend un réservoir d'huile (8) auquel est reliée en communication fluidique une conduite d'huile (9), dans lequel les éléments suivants sont inclus successivement dans la conduite d'huile (9) :
- un premier thermostat électronique (10) ayant une première température de commutation ;
- un système de récupération d'énergie (11) ;
- un refroidisseur d'huile (12) ;
dans lequel la conduite d'huile (9) va du refroidisseur d'huile (12) en retour vers le premier thermostat électronique (10), et ensuite vers une conduite d'injection d'huile. (16),
dans lequel le premier thermostat électronique (10) est configuré pour envoyer par commutation, en fonction d'une différence entre la première température de commutation et une température de l'huile, l'huile depuis le réservoir d'huile (8) soit dans le système de récupération d'énergie (11) et dans le refroidisseur d'huile (12), soit directement dans la conduite d'injection d'huile. (16).

2. Dispositif de refroidissement selon la revendication 1, **caractérisé en ce que** le refroidisseur d'huile (12) est un refroidisseur d'huile à air de refroidissement, le refroidisseur d'huile (12) étant de préférence muni d'un ventilateur réglable (13) destiné à générer un flux d'air de refroidissement destiné à refroidir le refroidisseur d'huile (12).

3. Dispositif de refroidissement selon l'une quelconque des revendications précédentes, **caractérisé en ce que** le premier thermostat électronique (10) est muni d'un ou de plusieurs filtres à huile (14) destinés à filtrer l'huile.

4. Dispositif de refroidissement selon l'une quelconque des revendications précédentes, **caractérisé en ce qu'**en aval du système de récupération d'énergie (11) et en amont du refroidisseur d'huile (12), un second thermostat (15) ayant une seconde température de commutation est inclus dans la conduite d'huile (9), dans lequel la conduite d'huile (9) passe du refroidisseur d'huile (12) en retour dans le second thermostat (15), puis dans le premier thermostat électronique (10) et enfin mène dans la conduite d'injection d'huile (16), dans lequel le second thermostat (15) est configuré, par commutation en fonction d'une différence entre la seconde température de commutation et la température de l'huile, pour envoyer l'huile depuis le système de récupération d'énergie (11) soit dans le refroidisseur d'huile (12), soit directement en retour dans le premier thermostat électronique (10), le second thermostat (15) étant de préférence un thermostat électronique.

5. Dispositif de refroidissement selon la revendication 4, **caractérisé en ce que** la première température de commutation est égale ou supérieure à la seconde température de commutation.

6. Dispositif compresseur à injection d'huile destiné à comprimer un gaz, **caractérisé en ce qu'**il est muni d'un dispositif de refroidissement (7) destiné au refroidissement d'huile selon l'une quelconque des revendications précédentes, dans lequel le dispositif compresseur (1) est muni d'un élément compresseur à injection d'huile (2) comportant un séparateur d'huile (6) destiné à la séparation d'huile injectée, dans lequel le séparateur d'huile (6) est relié en communication fluidique au réservoir d'huile (8) afin de décharger dans le réservoir d'huile (8) l'huile séparée, et dans lequel la conduite d'injection d'huile (16) mène en retour à l'élément compresseur (2) afin d'injecter de l'huile dans l'élément compresseur (2).

7. Dispositif compresseur à injection d'huile selon la revendication 6, **caractérisé en ce que** la première température de commutation est supérieure à une valeur de la température précitée de l'huile, dans lequel au niveau d'une sortie (5) de l'élément compresseur à injection d'huile (2) le gaz comprimé est à sa température de condensation, la première température de commutation étant de préférence égale à la valeur précitée plus une marge de sécurité positive réglable.

8. Procédé pour la régulation d'un dispositif de refroidissement selon l'une quelconque des revendications 1 à 5 précédentes, **caractérisé en ce que** :
- lorsque la température précitée de l'huile est supérieure à la première température de commutation, le premier thermostat électronique (10) envoie l'huile depuis le réservoir d'huile (8) vers le système de récupération d'énergie (11) ; et
- lorsque la température précitée de l'huile est inférieure ou égale à la première température de commutation, le premier thermostat électronique (10) envoie l'huile depuis le réservoir d'huile (8) directement vers la conduite d'injection d'huile (16).

9. Procédé selon la revendication 8 pour la régulation d'un dispositif de refroidissement selon l'une quelconque des revendications 5 à 7 précédentes, **caractérisé en ce que** :
- lorsque la température précitée de l'huile est supérieure à la seconde température de commutation, le second thermostat (15) envoie l'huile depuis le système de récupération d'énergie (11) vers le refroidisseur d'huile (12) ; et
- lorsque la température précitée de l'huile est inférieure ou égale à la seconde température de commutation, le second thermostat (15) renvoie l'huile depuis le système de récupération d'énergie (11) directement vers le premier thermostat électronique (10),
la première température de commutation étant de préférence choisie de manière à être égale ou supérieure à la seconde température de commutation.

10. Procédé selon la revendication 8 ou 9, **caractérisé en ce que** le dispositif de refroidissement (7) est muni d'un dispositif compresseur à injection d'huile (1) selon la revendication 6 ou 7, dans lequel la première température de commutation est choisie de manière à être supérieure à une valeur de la température précitée de l'huile, dans lequel au niveau d'une sortie (5) de l'élément compresseur à injection d'huile (2) le gaz comprimé est à sa température de condensation, de préférence la première température de commutation étant choisie de manière à être égale à la valeur précitée plus une marge de sécurité positive initiale réglable.

11. Procédé selon la revendication 10, **caractérisé en ce que** la température de condensation précitée est déterminée sur la base
- d'une pression de fonctionnement du gaz comprimé à la sortie (5) de l'élément compresseur à injection d'huile (2) ;
- d'une température ambiante dans un environnement du dispositif compresseur (1) ; et
- d'une valeur supposée de 100 % de l'humidité relative du gaz comprimé, dans le pire des cas, ou d'une valeur mesurée d'une humidité relative du gaz.

12. Procédé selon la revendication 10 ou 11, **caractérisé en ce que** la température précitée de l'huile est mesurée dans le séparateur d'huile (6) ou la température précitée de l'huile est déterminée sur la base d'une température du gaz comprimé mesurée à la sortie (5) de l'élément compresseur (2) ou dans le séparateur d'huile (6).

13. Procédé selon l'une quelconque des revendications 8 à 11 précédentes, **caractérisé en ce que** la température précitée de l'huile est mesurée dans le réservoir d'huile (8).

14. Procédé selon l'une quelconque des revendications 8 à 11 précédentes, **caractérisé en ce que** la température précitée de l'huile est mesurée dans la conduite d'injection d'huile (16) ou déterminée sur la base d'une température de l'huile mesurée dans la conduite d'injection d'huile (16).

15. Procédé selon l'une quelconque des revendications 8 à 14 précédentes, **caractérisé en ce qu'**une capacité de refroidissement du refroidisseur d'huile (12) est régulée sur la base d'une valeur souhaitée de la température précitée de l'huile, le refroidisseur d'huile (12) étant de préférence un refroidisseur d'huile à air de refroidissement, dans lequel un flux d'air de refroidissement est généré afin de refroidir le refroidisseur d'huile (12) et la capacité de refroidissement est régulée en ajustant une vitesse de rotation d'un ventilateur réglable (13) dont est muni le refroidisseur d'huile (12).
